# EUROPÄISCHE PATENTSCHRIFT

(11) **EP 1 993 701 B1**
(45) Veröffentlichungstag und Bekanntmachung des Hinweises auf die Patenterteilung: **28.12.2011**
(21) Anmeldenummer: 07722005.1
(22) Anmeldetag: 09.03.2007
(51) Int. Cl.: B01D 45/08, B01D 45/18, B01D 50/00

(54) **TROPFENABSCHEIDERANORDNUNG**
DROPLET SEPARATING SYSTEM
DISPOSITIF PARE-GOUTTES

(30) Priorität: 10.03.2006 DE 102006011185
(43) Veröffentlichungstag der Anmeldung: 26.11.2008
(73) Patentinhaber: Munters Euroform GmbH, 52068 Aachen (DE)
(72) Erfinder: KANKA, Helmut, 47178 Duisburg (DE); WOLF, Hubert, 40668 Meerbusch (DE); WANDRES, Peter, 52066 Aachen (DE)
(74) Vertreter: Hauck Patent- und Rechtsanwälte
(86) Internationale Anmeldenummer: PCT/DE2007/000430
(87) Internationale Veröffentlichungsnummer: WO 2007/104284

(56) Entgegenhaltungen:
- EP-A2- 0 149 307
- EP-A2- 0 747 107
- WO-A-2005/107921
- DE-B1- 2 260 729
- DE-C- 394 895
- DE-C- 932 403
- DE-U1- 8 536 592
- DE-U1- 20 018 970
- DE-U1- 20 302 380
- DE-U1-202005 002 677
- US-A- 877 460

## Beschreibung

Die vorliegende Erfindung betrifft eine Tropfenabscheideranordnung für Gaswäscher u.dgl. mit mindestens einer Tropfenabscheiderlage, die aus mindestens einer Reihe von in der Form eines V oder eines umgedrehten V angeordneten Tropfenabscheiderprofilen besteht.

Eine derartige Tropfenabscheideranordnung ist beispielsweise aus der DE 195 21 178 C2 bekannt. Bei der bekannten Tropfenabscheideranordnung sind in Gasströmur.gsrichtung mehrere Tropfenabscheiderlagen hintereinander angeordnet, wobei die Profile der hintereinander angeordneten Reihen der vorderen und hinteren Tropfenabscheiderlagen in Gasströmungsrichtung gegensinnig zueinander angeordnet sind. Aufgrund dieser Merkmale weist die bekannte Tropfenabscheideranordnung ein besonders gutes Reinigungsverhalten auf, da durch die gegensinnig geneigten Tropfenabscheiderprofile der benachbarten Lagen durch die entlang den Profilen abfließende Spülflüssigkeit entsprechend gute Reinigungseffekte entstehen.

Eine ähnliche Tropfenabscheideranordung ist aus der WO 2005/107921 A bekannt.

Es ist ferner bekannt, derartige in V-Form oder der Form eines umgedrehten V angeordnete Tropfenabscheiderlagen (Lamellenabscheider) in Kombination mit vorgeschalteten Agglomeratoren oder Vorabscheidern einzusetzen, die eine flache Lage bilden. So ist aus der DE 203 02 380 U1 ein Kombitropfenabscheider bekannt, der sich aus einer in der Form eines umgedrehten V ausgebildeten Tropfenabscheiderlage, die aus einzelnen Lamellenprofilen besteht, und einer vorgeschalteten flachen Vorabscheiderlage zusammensetzt, welche aus nebeneinander und im Abstand voneinander angeordneten Rohren bzw. Walzen besteht, die drehbar gelagert sind. Die Vorabscheiderlage setzt sich dabei aus zwei in Gasströmungsrichtung im Abstand voneinander angeordneten Einzellagen zusammen.

Aus der DE 85 36 592 U1 ist eine Einrichtung bekannt, bei der Gleichrichterprofile in Strömungsrichtung vor Abscheiderprofilen angeordnet sind.

An derartige Tropfenabscheideranordnungen werden heutzutage immer höhere Leistungsanforderungen gestellt. Mit anderen Worten, derartige Tropfenabscheideranordnungen sollen mit immer höheren Anströmgeschwindigkeiten beaufschlagt werden und dabei eine sehr hohe Abscheideleistung aufweisen. Diesen Anforderungen werden jedoch die bekannten Tropfenabscheideranordnungen, die sich aus einer oder mehreren Tropfenabscheiderlagen zusammensetzen, nicht immer gerecht.

Der vorliegenden Erfindung liegt die Aufgabe zugrunde, eine Tropfenabscheideranordnung der angegebenen Art zu schaffen, die bei einer hohen Leistungsfähigkeit eine besonders gute Flüssigkeitsabführung (ein besonders gutes Reinigungsverhalten) sicherstellt.

Diese Aufgabe wird erfindungsgemäß bei einer Tropfenabscheideranordnung der angegebenen Art durch die kennzeichnenden Merkmale von Patentanspruch 1 gelöst.

Die erfindungsgemäß ausgebildete Tropfenabscheideranordnung besitzt somit zusätzlich zu der mindestens einen Tropfenabscheiderlage, in der vorzugsweise Lamellenabscheider zum Einsatz kommen, eine vorgeschaltete Gleichrichterlage, die eine Gleichrichtung der die die Tropfenabscheiderlage beaufschlagenden Gasströmung bewirkt. Durch die Anordnung dieser Gleichrichterlage kann mit besonders hohen Gasanströmgeschwindigkeiten gearbeitet werden, die wesentlich über 5 m/sec liegen..Insgesamt lässt sich daher der Gasdurchsatz durch die Tropfenabscheiderlage steigern.

Die erfindungsgemäß vorgesehene Gleichrichterlage setzt sich aus mindestens einer Reihe von nebeneinander mit Abstand voneinander angeordneten rohrförmigen oder stabförmigen Gleichrichterelementen zusammen. Die Größe dieser Gleichrichterelemente und/oder deren Abstand ist dabei so bemessen, dass diese (im wesentlichen) nur eine Gleichrichtungsfunktion übernehmen und keine Agglomerator- und/oder Vorabscheidefunktion durchführen. Die spezielle Dimensionierung von derartigen Gleichrichterelementen sowie von deren Abständen ist dem Fachmann bekannt bzw. kann durch geeignete Versuche ermittelt werden.

Ein wesentliches erfindungsgemäßes Merkmal besteht darin, dass die Reihe der Gleichrichterelemente in der Form eines V oder eines umgedrehten V mit entgegengesetzter Neigung zu der entsprechenden Reihe der Tropfenabscheiderprofile der Tropfenabscheiderlage angeordnet ist. Die Erfinder der vorliegenden Anordnung haben festgestellt, dass sich bei einer flachen Anordnung der Gleichrichterelemente vor einer Tropfenabscheiderlage in V-Form oder in der Form eines umgedrehten V Probleme ergeben, die dazu führen, dass die Gleichrichterlage ihre Funktion als Strömungsgleichrichter nur unzureichend erfüllen kann. Diese Probleme sind in erster Linie darauf zurückzuführen, dass sich die Zwischenräume zwischen den einzelnen Gleichrichterelementen relativ rasch mit Verunreinigungen zusetzen, da sie von den vorgesehenen Spülsystemen nur unzureichend gereinigt werden, und dass auf diese Weise das von der nachfolgenden Tropfenabscheiderlage abgeschiedene Wasser und/oder die zum Spülen verwendete Flüssigkeit nicht mehr korrekt abfließen können. Das auf der Gleichrichterlage gestaute Wasser führt daher zu einer weiteren Verschlechterung des Strömungsgleichrichtungseffektes der Gleichrichterlage.

Um diese Nachteile zu überwinden, haben die Erfinder vorgeschlagen, auch die Reihe der Gleichrichterelemente in der Form eines V oder eines umgedrehten V (analog zur Reihe der Tropfenabscheiderprofile) auszubilden, jedoch mit entgegengesetzter Neigung zu der entsprechenden Reihe der Tropfenabscheiderprofile. Auf diese Weise wird ein besonders guter Spül- bzw. Reinigungseffekt der Gleichrichterelemente erreicht, da das entlang den Tropfenabscheiderprofilen (Lamellen) der Tropfenabscheiderlage nach innen (zur tiefsten Stelle des V) oder beidseitig nach außen fließende Wasser mittig auf den Scheitel der in der Form eines umgedrehten V angeordneten Reihe der Gleichrichterelemente oder außen auf die höchsten Punkte der Schenkel der V-förmig angeordneten Reihe von Gleichrichterelementen gelangt und entlang diesen Elementen bis zum jeweils tiefsten Punkt der Reihe nach außen oder nach innen strömt, wodurch die Gleichrichterelemente gereinigt werden und ein Zuwachsen der Zwischenräume weitgehend verhindert wird.

Was die Neigung der V-förmig oder in der Form eines umgedrehten V (dachförmig) angeordneten Gleichrichterelemente anbetrifft, so sind diese mit einem Winkel von 10-30°, insbesondere 15°, zur Horizontalen geneigt. Dieser Winkelbereich hat sich in bezug auf die Gleichrichterfunktion und die Reinigungsfunktion als optimal erwiesen.

Da es sich bei den Gleichrichterelementen um rohrförmige oder stabförmige Elemente handelt, die keine ausgeprägten Tropfkanten aufweisen, ist sichergestellt, dass das von der Tropfenabscheiderlage abgegebene Wasser nahezu über die gesamte Länge der V-Schenkel einer Reihe aus Gleichrichterelementen fließt und somit über nahezu die gesamte Länge der Gleichrichterelemente deren Verunreinigung verhindert.

Die erfindungsgemäße Lösung sorgt damit für eine Leistungssteigerung der Tropfenabscheideranordnung durch Vorschaltung mindestens einer Gleichrichterlage und gleichzeitig für eine dauerhafte Reinigung der Gleichrichterelemente, so dass die Gleichrichterlage eine lange Nutzungsdauer erhält bzw. periodische Stilllegezeiten der Anordnung zum Reinigen reduziert werden können.

Insbesondere gelingt es durch die erfindungsgemäße Ausgestaltung der Gleichrichterlage das Spülwasser so zu führen, dass sich ein besonders guter Reinigungseffekt ergibt.

In Weiterbildung der Erfindung sind die Tropfenabscheiderlage und die Gleichrichterlage über eine gemeinsame Stützkonstruktion an einem Träger gelagert. Bei der gemeinsamen Stützkonstruktion handelt es sich vorzugsweise um eine Seitenwand, an der die Enden der Gleichrichterelemente fixiert bzw. gelagert sind und an der ebenfalls die Tropfenabscheiderprofile (Lamellen) fixiert oder gelagert sind. Die Gleichrichterelemente und Tropfenabscheiderprofile können auch über gemeinsame Seitenwände zu Paketen zusammengefasst sein, wobei diese Seitenwände dann an der gemeinsamen Seitenwand der Stützkonstruktion fixiert oder verschiebbar gelagert sind. Die gemeinsame Seitenwand der Stützkonstruktion besitzt ferner eine sich rechtwinklig hiervon erstreckende Auflage zur Lagerung der Anordnung auf einem fest installierten Träger. Des weiteren ist an der gemeinsamen Seitenwand eine Bedüsungskonstruktion fixiert. Vorzugsweise erstreckt sich ein Verbindungsstab von einem Träger zum benachbarten Träger durch eine entsprechende Ausnehmung in der gemeinsamen Seitenwand und ist ebenfalls an dieser befestigt.

Die Befestigung bzw. Lagerung der rohrförmigen oder stabförmigen Gleichrichterelemente an der gemeinsamen Seitenwand der Stützkonstruktion kann über geeignete bekannte Befestigungsmittel erfolgen, beispielsweise Schweißen, Verschrauben, Verklemmen etc. Wenn die Gleichrichterelemente beweglich oder begrenzt beweglich an der gemeinsamen Seitenwand gelagert sind, sind entsprechende Mittel vorgesehen, um eine Drehbeweglichkeit oder begrenzte Drehbeweglichkeit zu ermöglichen.

Was die Ausgestaltung der Gleichrichterelemente betrifft, so sind diese vorzugsweise rohrförmig ausgebildet, wobei auch eine entsprechende stabförmige Ausführungsform (mit Vollquerschnitt) möglich ist. Die Außenform der Gleichrichterelemente ist an sich nicht kritisch, sollte jedoch den durch das herabfließende Wasser erzielten Reinigungseffekt begünstigen, wobei vorzugsweise der gesamte Umfang der Gleichrichterelemente umflossen werden sollte (Vermeidung von Tropfkanten). Vorzugsweise sind die Gleichrichterelemente im Querschnitt kreisförmig oder oval ausgebildet. Auch rechteckige bzw. quadratische Querschnittsformen sind möglich. Bei einer besonderen Ausführungsform der Erfindung sind die Gleichrichterelemente im Querschnitt schalenförmig, insbesondere halbkreisförmig, ausgebildet, so dass sie das von der Tropfenabscheiderlage herabfließende Wasser auffangen und abführen können. Diese Ausführungsform hat jedoch den Nachteil, das hierbei die Außenseite der Gleichrichterelemente keinem starken Spüleffekt bzw. Reinigungseffekt unterzogen wird, da das Wasser von der Schale aufgefangen und abgeführt wird.

Noch eine andere Ausführungsform, bei der die Gleichrichterelemente vorzugsweise in der Form von geschlossenen Rohren ausgebildet sind, sieht vor, dass diese Einlass- und Auslassöffnungen für die von der Tropfenabscheiderlage abgegebene Reinigungsflüssigkeit aufweisen. Hierbei kann zumindest ein Teil der Reinigungsflüssigkeit in das Innere der Gleichrichterelemente gelangen und dort abgeführt werden. Diese Ausführungsform sowie die Ausführungsform mit schalenförmigem Querschnitt kommen insbesondere dann zur Anwendung, wenn große Flüssigkeitsmengen anfallen, die nicht vollständig zur Reinigung der Gleichrichterelemente benötigt werden.

Eine weitere Ausführungsform der Erfindung sieht vor, dass die Gleichrichterelemente drehbar gelagert sind. Die Gleichrichterelemente werden dabei durch den Gasstrom mit Drehmomenten beaufschlagt, die einen Drehvorgang der Gleichrichterelemente erzeugen. Diese Drehvorgänge können dazu beitragen, Verunreinigungen der Gleichrichterelemente (Verkrustungen) zu entfernen. Bei einer besonderen Ausführungsform sind die Gleichrichterelemente hin- und herschwingbar gelagert, so dass sie sich nur über ein bestimmtes Winkelmaß drehen können. Auch ein derartiger Schwingvorgang hat eine Entfernung von Verunreinigungen zur Folge.

Erfindungsgemäß kann die Gleichrichterlage in Gasströmungsrichtung von einer oder mehreren Schichten von Gleichrichterelementen gebildet sein. Sind mehrere Schichten vorhanden, sind die Gleichrichterelemente benachbarter Schichten vorzugsweise versetzt zueinander angeordnet.

Bei einer speziellen Ausführungsform sind die in V-Form angeordneten Tropfenabscheiderprofile und die in der Form eines umgedrehten V angeordneten Gleichrichterelemente mittig an einer gemeinsamen Endwand befestigt.

Grundsätzlich können mehrere Tropfenabscheiderprofile (Lamellenprofile) und Gleichrichterelemente (Rohrprofile) über gemeinsame Endwände bzw. Seitenwände zu Paketen zusammengefasst sein. Diese Pakete können dann an der erwähnten gemeinsamen Stützkonstruktion oder der vorstehend erwähnten gemeinsamen Endwand gelagert oder befestigt sein. Die Lagerung kann hierbei so erfolgen, dass die End- bzw. Seitenwände der Pakete verschiebbar in entsprechenden Taschen bzw. Aufnahmen der Stützkonstruktion bzw. mittleren Endwand verschiebbar gelagert sind, so dass sich die Pakete relativ einfach austauschen lassen, ohne dass beispielsweise die Stützkonstruktion demontiert werden muss.

Die Erfindung wird nachfolgend anhand von Ausführungsbeispielen in Verbindung mit der Zeichnung im einzelnen erläutert. Von der Zeichnung zeigen:
- Figur 1: einen schematischen Vertikalschnitt durch eine erste Ausführungsform einer Tropfenabscheideranordnung;
- Figur 2: einen schematischen Vertikalschnitt durch eine zweite Ausführungsform einer Tropfenabscheideranordnung;
- Figur 3: einen schematischen Vertikalschnitt durch eine dritte Ausführungsform einer Tropfenabscheideranordnung;
- Figur 4: einen schematischen Vertikalschnitt durch eine vierte Ausführungsform einer Tropfenabscheideranordnung;
- Figur 5: eine schematischen Ansicht einer Seitenwand einer Gleichrichterlage;
- Figur 6: einen schematischen Teilvertikalschnitt, der die Anbringung der Gleichrichterelemente an einer Stützkonstruktion gemäß einer ersten Ausführungsform zeigt;
- Figur 7: einen schematischen Vertikalschnitt, der die Anbringung eines Gleichrichterelementes an einer Stützkonstruktion einer zweiten Ausführungsform zeigt; und
- Figur 8: einen schematischen Teilvertikalschnitt und eine Ansicht, die die Anbringung eines Gleichrichterelementes an einer Stützkonstruktion gemäß einer dritten Ausführungsform zeigen.

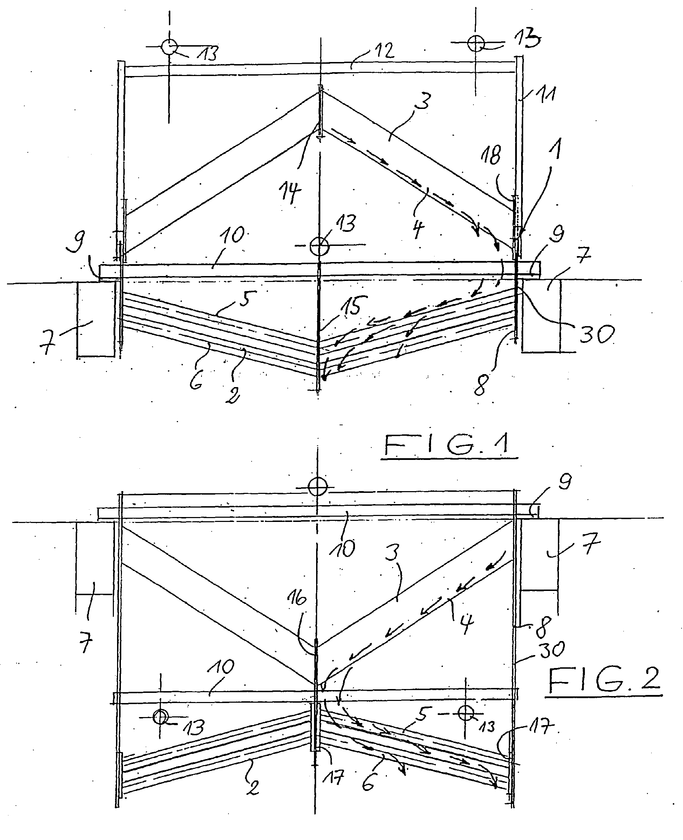

Bei der in Figur 1 schematisch dargestellten Tropfenabscheideranordnung 1 handelt es sich um eine solche eines Gaswäschers. Die Tropfenabscheideranordnung 1 besitzt eine Gleichrichterlage 2 und eine Tropfenabscheiderlage 3. Die Anordnung dient dazu, aus einem in der Figur von unten nach oben strömenden Gasstrom Flüssigkeit abzuscheiden, wie dies bekannt ist.

Die Tropfenabscheiderlage 3 ist in der Form eines umgedrehten V bzw. dachförmig ausgebildet und besitzt eine Vielzahl von in Lamellenform gestalteten Tropfenabscheiderprofilen 4, die parallel zueinander geneigt angeordnet sind und zwischen denen der Gasstrom auf einem gewundenen Weg hindurchtritt, so dass Flüssigkeit abgeschieden wird. Diese Flüssigkeit fließt, wie durch die Pfeile in Figur 1 angedeutet, entlang den Tropfenabscheiderprofilen 4 seitwärts nach unten. Ober entsprechenden Endwände 14 und Seitenwände 18 sind mehrere Tropfenabscheiderprofile 4 zu Paketen zusammengefasst. Diese Pakete stützen sich über die Endwände 14 gegeneinander ab und sind mit Hilfe der Seitenwände 18 an einer gemeinsamen Stützkonstruktion 30 gelagert, die eine weitere Seitenwand 8, eine Auflage 9 zur Lagerung auf einem fest installierten Träger 7 und einen Verbindungsstab 10 umfasst, der sich von einem Träger zum benachbarten Träger erstreckt. An der gemeinsamen Stützkonstruktion 30 ist ferner eine Bedüsungskonstruktion befestigt, die sich aus Pfosten 11, Querstäben 12 und Düsen 13 zusammensetzt. Diese Bedüsungskonstruktion dient zur periodischen Reinigung der Tropfenabscheideranordnung.

Die Gleichrichterlage 2 besteht aus zwei übereinander angeordneten Schichten 5, 6 von rohrförmigen Gleichrichterelementen. Die Gleichrichterelemente sind an einer gemeinsamen mittleren Endwand 15 befestigt, die am verbindungsstab 10 fixiert ist. Mit ihren anderen Ende sind sie jeweils an der Seitenwand 8 der gemeinsamen Stützkonstruktion 30 fixiert.

Wie man Figur 1 entnehmen kann, ist die Gleichrichterlage 2 V-förmig ausgebildet. Die Neigung der Gleichrichterelemente 5, 6 zur Horizontalen ist jedoch geringer als die der Tropfenabscheiderprofile 4 und beträgt etwa 15°, während die der Tropfenabscheiderprofile etwa 37° beträgt.

Die in Figur 1 dargestellten Pfeile deuten den Weg der von der Tropfenabscheiderlage 3 abgeschiedenen Flüssigkeit und der Spülflüssigkeit an, wenn sich die Bedüsungskonstruktion in Betrieb befindet. Wie erwähnt, strömt die Flüssigkeit entlang den Tropfenabscheiderprofilen 4 schräg nach unten und außen und gelangt von dort, wie durch die Pfeile angedeutet, auf die darunter befindlichen Gleichrichterelemente 5, 6, die sie aufgrund von deren runder Form umströmt und dabei entlang den rohrförmigen Gleichrichterelementen nach unten zur Mitte hin fließt. Dort tropft die Flüssigkeit von der Gleichrichterlage nach unten. Durch diesen Strömungsweg der Flüssigkeit werden sowohl die einzelnen Tropfenabscheiderprofile als auch die einzelnen Gleichrichterelemente gereinigt, so dass die Gleichrichterelemente ihre Strömungsgleichrichtungsfunktion ohne die Gefahr von Verunreinigungen einwandfrei ausführen können.

Figur 2 zeigt eine entsprechende Ansicht wie Figur 1 einer anderen Ausführungsform, bei der die Tropfenabscheiderlage in der Form eines V und die vorgeschaltete Gleichrichterlage in der Form eines umgedrehten V ausgebildet sind. Bei dieser Ausführungsform sind beide Lagen an einer gemeinsamen Stützkonstruktion 30 angeordnet, die sich aus einer Seitenwand 30, einer sich hiervon rechtwinklig erstreckenden Auflage 9 und zwei Verbindungsstäben 10 zusammensetzt. Eine gemeinsame mittig angeordnete Endwand 16 ist vorgesehen, an der sowohl die Tropfenabscheiderprofile 4 direkt als auch die Gleichrichterelemente über zusätzliche Endwände 17 befestigt sind. Die Gleichrichterelemente sind des weiteren über zusätzliche Seitenwände 17 an der Seitenwand 8 der gemeinsamen Stützkonstruktion befestigt, während die Tropfenabscheiderprofile direkt an der Seitenwand 8 angebracht sind.

Bei dieser Ausführungsform fließt die von der Tropfenabscheiderlage abgeschiedene Flüssigkeit bzw. die Spülflüssigkeit entlang den einzelnen Tropfenabscheiderprofilen in Figur 2 von außen nach innen und gelangt von dort auf die beiden Schichten 5, 6 der Gleichrichterelemente, wie durch die Pfeile angedeutet. Die Flüssigkeit strömt des weiteren an den Gleichrichterelementen entlang nach außen, so dass diese gereinigt werden, und tropft dann von den Gleichrichterelementen herab. Es wird daher ein entsprechender Effekt wie bei der Ausführungsform der Figur 1 erzielt, mit dem Unterschied, dass hierbei die Strömungsrichtung entgegengesetzt ist.

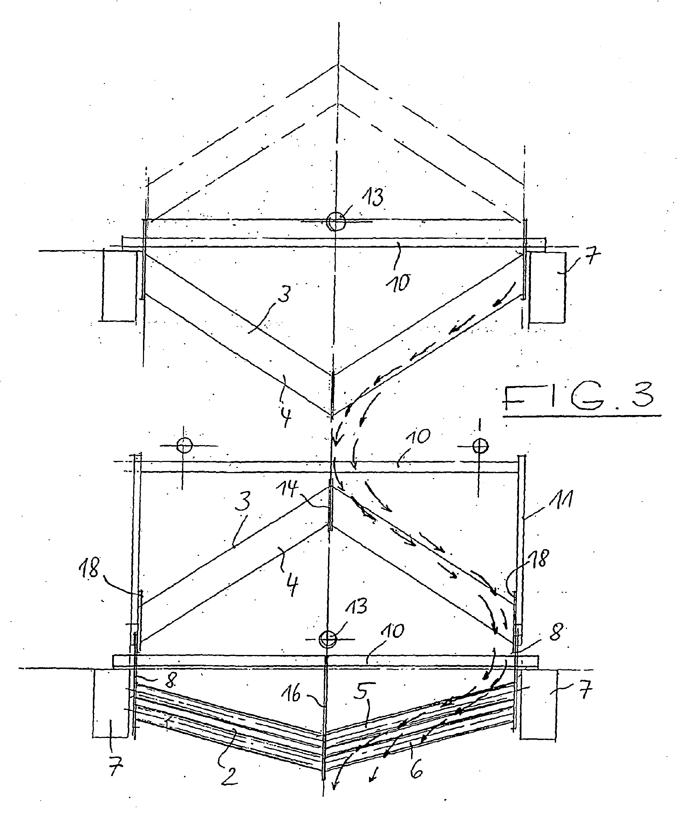

Figur 3 zeigt eine entsprechende Ansicht wie die Figuren 1 und 2, wobei bei dieser Ausführungsform zwei Tropfenabscheiderlagen 3 auf verschiedenen Trägern 7 angeordnet sind. In Gasströmungsrichtung besitzt diese Ausführungsform eine Gleichrichterlage 2, die sich aus einer ersten und zweiten Schicht 5, 6 von Gleichrichterelementen zusammensetzt, eine erste Tropfenabscheiderlage 3 und eine zweite nachfolgende Tropfenabscheiderlage 3. Die Gleichrichterlage 2 ist V-förmig angeordnet, die erste Tropfenabscheiderlage ist in der Form eines umgedrehten V angeordnet bzw. ausgebildet, und die zweite Tropfenabscheiderlage 3 ist wiederum V-förmig angeordnet bzw. ausgebildet. Der Strömungsweg der abgeschiedenen Flüssigkeit und/oder Spülflüssigkeit ist durch Pfeile in Figur 3 angedeutet. Auch hier wird durch die V-förmig geneigte Anordnung der Gleichrichterelemente ein vergleichbarer Spül- bzw. Reinigungseffekt erzielt.

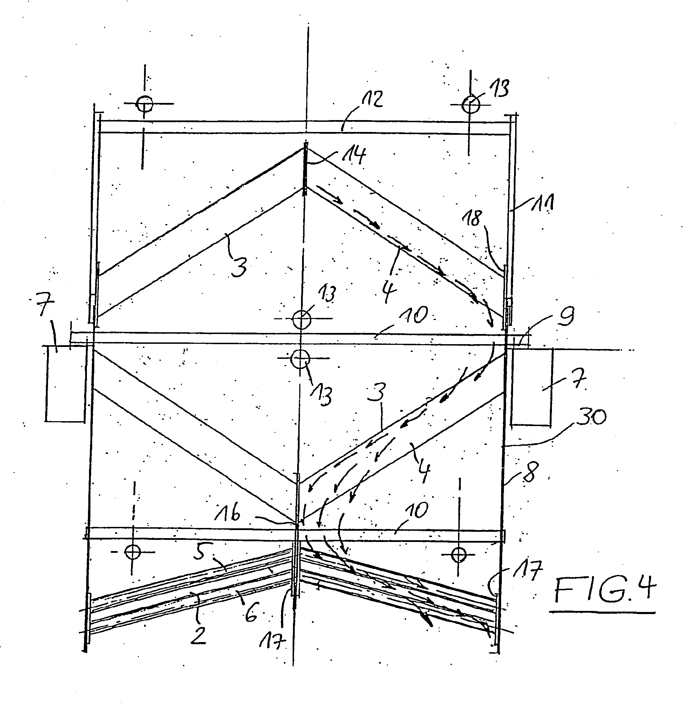

Figur 4 zeigt eine entsprechende Ansicht noch einer anderen Ausführungsform. Bei dieser Ausführungsform besitzen in Gasströmungsrichtung eine in der Form eines umgedrehten V angeordnete bzw. ausgebildete Gleichrichterlage 2, eine nachfolgende V-förmig angeordnete bzw. ausgebildete erste Tropfenabscheiderlage 3 und eine nachfolgende, in der Form eines umgedrehten V ausgebildete zweite Tropfenabscheiderlage 3 eine gemeinsame Stützkonstruktion 30, mit der alle drei Lagen an Trägern 7 abgestützt sind. Diese gemeinsame Stützkonstruktion 30 weist ebenfalls eine Seitenwand 8, eine von dieser rechtwinklig verlaufende Lagerauflage 9 zur Lagerung auf dem Träger 7 und zwei Verbindungsstangen 10 auf. Die jeweiligen Tropfenabscheiderprofile 4 und Gleichrichterelemente der beiden Schichten 5, 6 sind entweder über gesonderte Seitenwände 17, 18 oder direkt an der gemeinsamen Seitenwand 8 der Stützkonstruktion 30 befestigt. Eine gemeinsame mittlere Endwand 16 dient zur Fixierung der Tropfenabscheiderprofile 4 und der Gleichrichterelemente über gesonderte Endwände 17. Der Strömungsverlauf der abgeschiedenen Flüssigkeit und/oder Spülflüssigkeit ist hierbei entgegengesetzt zur Ausführungsform der Figur 3.

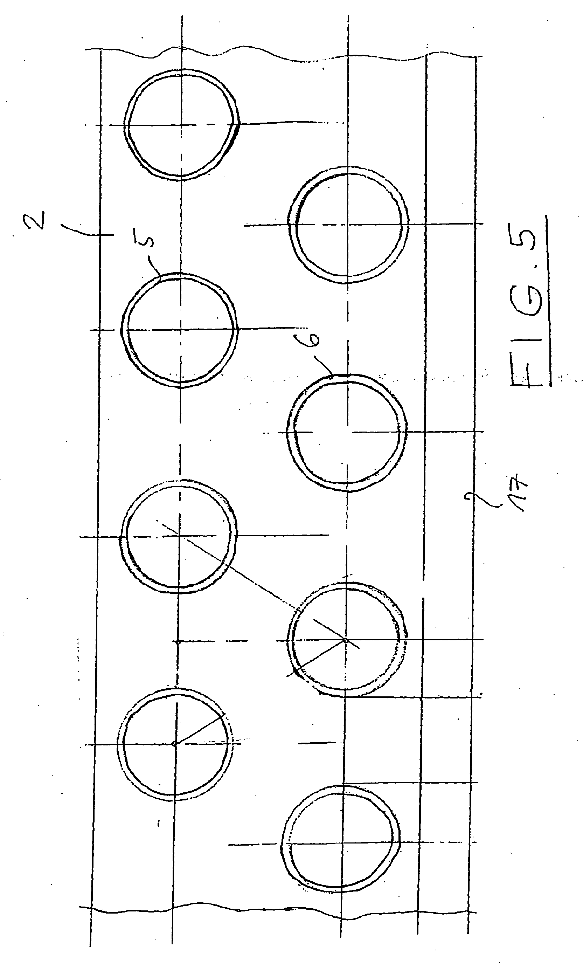

Figur 5 zeigt eine Teilansicht einer Seitenwand bzw. Endwand 17, über die die rohrförmigen Gleichrichterelemente 5, 6 der beiden Schichten an einer mittleren Endwand 16 oder der Seitenwand 8 der gemeinsamen Stützkonstruktion 30 befestigt sind. Die Gasströmungsrichtung verläuft hierbei in der Figur von unten nach oben. Man erkennt, dass die rohrförmigen Gleichrichterelemente 5 der in Gasströmungsrichtung nachgeordneten Schicht gegenüber den rohrförmigen Gleichrichterelementen 6 der ersten Schicht versetzt angeordnet sind, und zwar genau mittig zwischen zwei Gleichrichterelementen 6 der ersten Schicht. Die entsprechenden Abstände zwischen den einzelnen Gleichrichterelementen sowie deren Größe sind vom Fachmann empirisch zu ermitteln, damit eine korrekte Gleichrichterfunktion der Gleichrichterlage sichergestellt wird.

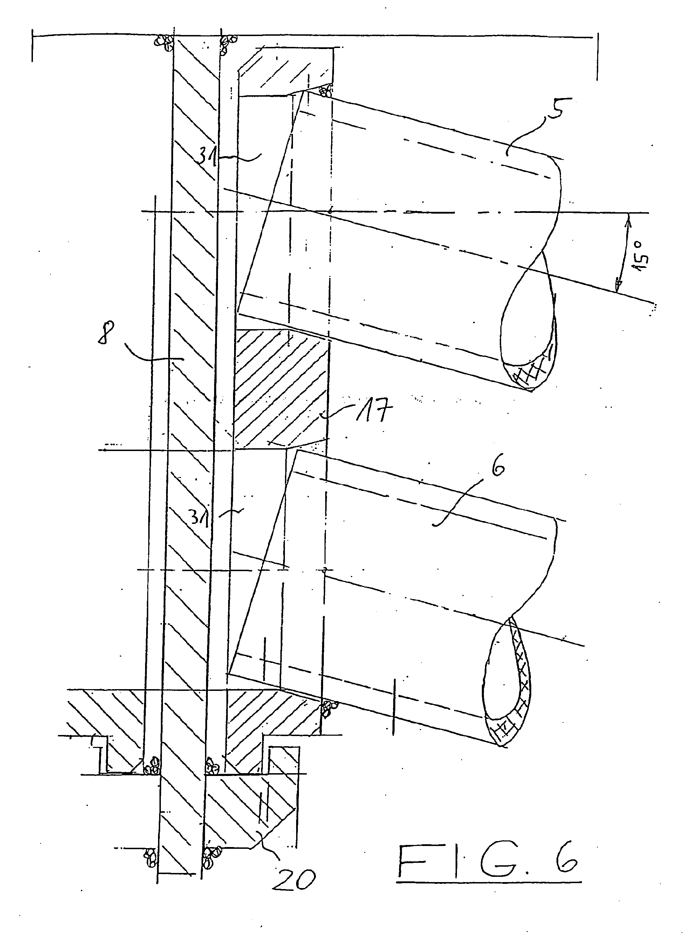

Figur 6 zeigt ein Beispiel der Befestigung der rohrförmigen Gleichrichterelemente 5, 6 an der Seitenwand 8 der gemeinsamen Stützkonstruktion. Die Befestigung erfolgt hierbei über eine zusätzliche Seitenwand 17, die auf einer an die Seitenwand 8 geschweißte Nase 20 ruht. Diese Seitenwand 17 weist entsprechende Öffnungen zur Aufnahme der schräg angeordneten Gleichrichterelemente 5, 6 auf, wobei sich diese Öffnungen 31 konisch erweitern, um eine glatte Anlage der schräg gestellten Gleichrichterelemente 5, 6 zu ermöglichen. Eine Fixierung der Elemente in den Öffnungen kann über Schweißnähte erfolgen.

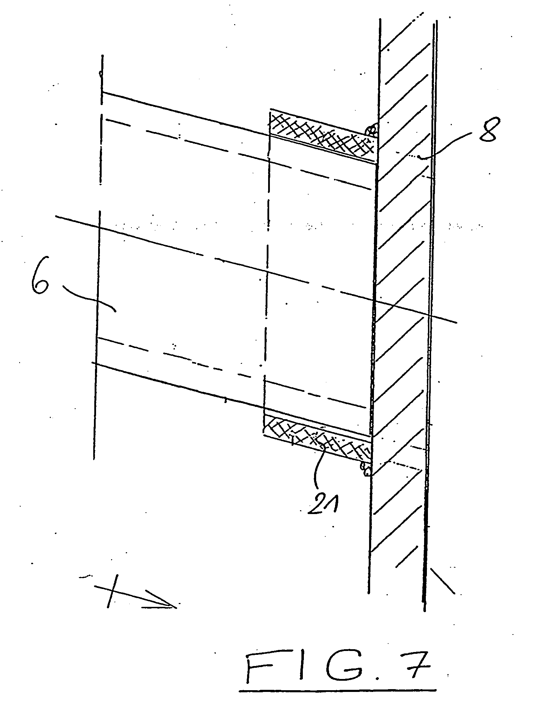

Eine weitere Ausführungsform der Befestigung der Gleichrichterelemente an der Seitenwand 8 der gemeinsamen Stützkonstruktion zeigt Figur 7. Hierbei sind die Gleichrichterelemente 5, 6 mit ihren Endbereichen in rohrförmige Aufnahmen 21 eingeführt, die an die Seitenwand 8 geschweißt sind. Die Aufnahmen 21 nehmen die Enden der Gleichrichterelemente im wesentlichen formschlüssig auf.

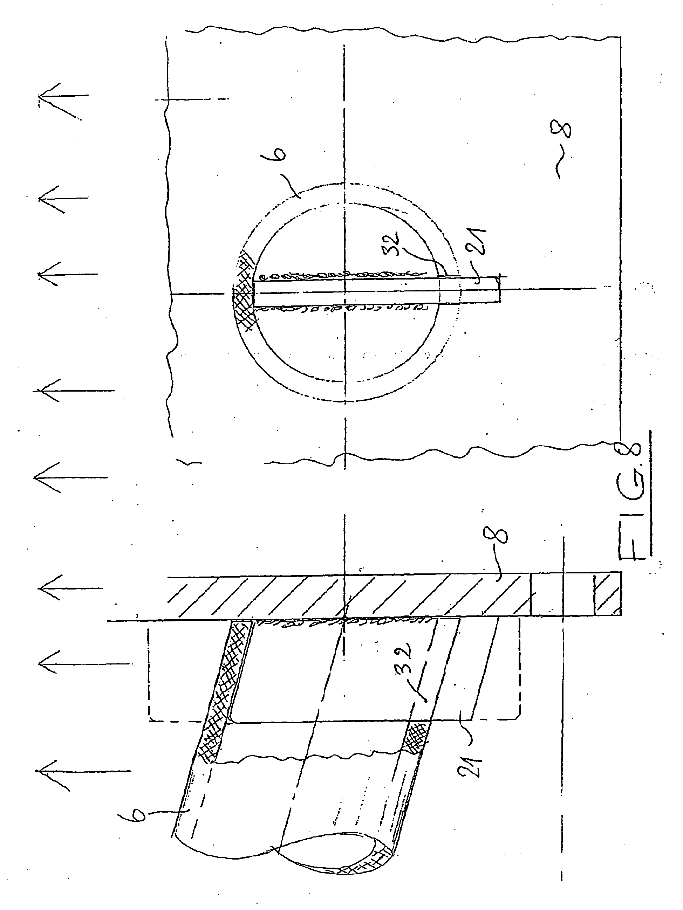

Eine weitere Art der Befestigung zeigt Figur 8. Die linke Schnittdarstellung von Figur 8 zeigt, dass an die Seitenwand 8 der gemeinsamen Stützkonstruktion eine nach innen ragende Platte 21 geschweißt ist, die in einen an der Unterseite des rohrförmigen Gleichrichterelementes 6 ausgebildeten Schlitz 32 eingreift und auf diese Weise das Gleichrichterelement 6 hält. Die in Figur 8 rechts dargestellte Ansicht zeigt auf schematische Weise diese Art der Befestigung.

Wie vorstehend erwähnt, sind die Gleichrichterelemente rohrförmig oder stabförmig ausgebildet, wobei sie die unterschiedlichsten Querschnitte aufweisen können, von denen bevorzugte Ausführungsformen bereits vorstehend erwähnt wurden. Zu erwähnen ist noch, dass die Gleichrichterelemente im Querschnitt auch U-förmig oder in der Form eines umgedrehten U ausgebildet sein können. Bei einer weiteren Ausführungsform besitzen die Gleichrichterelemente im Querschnitt Tropfenform. Es können Voll- oder Hohlquerschnitte zur Anwendung gelangen.

Bei der Ausführungsform, bei der die Gleichrichterelemente hin- und herschwingbar gelagert sind, können diese um ihre Mittelachse schwingen. Bei anderen Ausführungsformen schwingen sie um exzentrisch angeordnete Achsen, die beispielsweise im oberen oder unteren Bereich eines Gleichrichterelementes angeordnet sein können. Hierbei können die Gleichrichterelemente beispielsweise nach oben oder unten vorstehende Abschnitte besitzen, mit denen eine Schwenklagerung verwirklicht ist.

## Patentansprüche

1. Tropfenabscheideranordnung für Gaswäscher u.dgl. mit mindestens einer Tropfenabscheiderlage (3), die aus mindestens einer Reihe von in der Form eines V oder eines umgedrehten V angeordneten Tropfenabscheiderprofilen (4) besteht, **dadurch gekennzeichnet, dass** sie des Weiteren mindestens eine in Gasströmungsrichtung vor der Tropfenabscheiderlage (3) angeordnete Gleichrichterlage (2) aufweist, die sich aus mindestens einer Reihe von nebeneinander mit Abstand voneinander angeordneten rohrförmigen oder stabförmigen Gleichrichterelementen (5, 6) zusammensetzt, dass die Reihe der Gleichrichterelemente (5, 6) in der Form eines V oder eines umgedrehten V mit entgegengesetzter Neigung zu der entsprechenden Reihe der Tropfenabscheiderprofile (4) der Tropfenabscheiderlage (39 angeordnet ist und dass die Neigung der Gleichrichterelemente (5, 6) zur Horizontalen geringer ist als die der Tropfenabscheiderprofile (4), wobei die Gleichrichterelemente (5, 6) unter einem Winkel von 10-30° zur Horizontalen geneigt sind.

2. Tropfenabscheideranordnung nach Anspruch 1, **dadurch gekennzeichnet, dass** die Tropfenabscheiderlage (3) und die Gleichrichterlage (2) über eine gemeinsame Stützkonstruktion (30) an einem Träger (7) gelagert sind.

3. Tropfenabscheideranordnung nach Anspruch 1 oder 2, **dadurch gekennzeichnet, dass** die Gleichrichterelemente (5, 6) im Querschnitt kreisförmig oder oval ausgebildet sind.

4. Tropfenabscheideranordnung nach Anspruch 1 oder 2, **dadurch gekennzeichnet, dass** die Gleichrichterelemente (5, 6) im Querschnitt rechteckförmig ausgebildet sind.

5. Tropfenabscheideranordnung nach Anspruch 1 oder 2, **dadurch gekennzeichnet, dass** die Gleichrichterelemente im Querschnitt schalenförmig, insbesondere halbkreisförmig, ausgebildet sind.

6. Tropfenabscheideranordnung nach einem der vorangehenden Ansprüche, **dadurch gekennzeichnet, dass** die Gleichrichterelemente Einlass- und Auslassöffnungen für die von der Tropfenabscheiderlage abgegebene Flüssigkeit aufweisen.

7. Tropfenabscheideranordnung nach einem der vorangehenden Ansprüche, **dadurch gekennzeichnet, dass** die Gleichrichterelemente drehbar gelagert sind.

8. Tropfenabscheideranordnung nach einem der Ansprüche 1 bis 6, **dadurch gekennzeichnet, dass** die Gleichrichterelemente hin- und herschwingbar gelagert sind.

9. Tropfenabscheideranordnung nach einem der vorangehenden Ansprüche, **dadurch gekennzeichnet, dass** die Gleichrichterlage (2) in Gasströmungsrichtung von mehreren Schichten von Gleichrichterelementen (5, 6) gebildet ist.

10. Tropfenabscheideranordnung nach Anspruch 9, **dadurch gekennzeichnet, dass** die Gleichrichterelemente (5, 6) benachbarter Schichten versetzt zueinander angeordnet sind.

11. Tropfenabscheideranordnung nach einem der vorangehenden Ansprüche, **dadurch gekennzeichnet, dass** die in V-Form angeordneten Tropfenabscheiderprofile (4) und die in der Form eines umgedrehten V angeordneten Gleichrichterelemente (5, 6) mittig an einer gemeinsamen Endwand (16) befestigt sind.

## Claims

1. A droplet separating system for gas scrubbers etc. comprising at least one droplet separator layer (3) consisting of at least one row of droplet separator profiles (4) arranged in the form of a V or of a reversed V, **characterized in that** it includes furthermore at least one flow rectifying layer (2) arranged ahead of the droplet separator layer (3) in gas flow direction, said flow rectifying layer consisting of at least one row of adjacent and spaced tube-like or rod-like rectifying elements (5, 6), the row of flow rectifying elements (5, 6) being arranged in the form of a V or of a reversed V with opposite inclination with respect to the corresponding row of droplet separator profiles (4) of the droplet separator layer (3), and the inclination of the flow rectifying elements (5, 6) with regard to a horizontal line being smaller than that of the droplet separator profiles (4) wherein the flow rectifying elements (5, 6) are inclined with an angle of 10-30° with respect to a horizontal line.

2. The droplet separating system according to claim 1, **characterized in that** the droplet separator layer (3) and the flow rectifying layer (2) are mounted at a beam (7) by means of a common support construction (30).

3. The droplet separating system according to claim 1 or 2, **characterized in that** the flow rectifying elements (5, 6) are formed circularly or ovally in cross-section.

4. The droplet separating system according to claim 1 or 2, **characterized in that** the flow rectifying elements (5, 6) are rectangularly formed in cross-section.

5. The droplet separating system according to claim 1 or 2, **characterized in that** the flow rectifying elements are formed in a shell-like manner, especially semi-circularly, in cross-section.

6. The droplet separating system according to one of the preceding claims, **characterized in that** the flow rectifying elements have inlet and outlet openings for the liquid discharged by the droplet separator layer.

7. The droplet separating system according to one of the preceding claims, **characterized in that** the flow rectifying elements are rotatably mounted.

8. The droplet separating system according to one of the claims 1 to 6, **characterized in that** the flow rectifying elements are oscillatably mounted.

9. The droplet separating system according to one of the preceding claims, **characterized in that** the flow rectifying layer (2) is formed by a plurality of layers of flow rectifying elements (5, 6) in gas flow direction.

10. The droplet separating system according to claim 9, **characterized in that** the flow rectifying elements (5, 6) of adjacent layers are offset with respect to one another.

11. The droplet separating system according to one of the preceding claims, **characterized in that** the droplet separator profiles (4) arranged in V form and the flow rectifying elements (5, 6) arranged in the form of a reversed V are centrally fixed at a common end wall (16).

## Revendications

1. Aménagement séparateur de gouttes pour épurateurs de gaz et similaires, comprenant au moins une couche séparatrice de gouttes (3), qui est constituée d'au moins une rangée de profilés séparateurs de goutte (4) agencés sous la forme d'un V ou d'un V inversé, **caractérisé en ce qu'**il présente par ailleurs au moins une couche redresseuse (2) agencée dans la direction de l'écoulement gazeux devant la couche séparatrice de gouttes (3), laquelle couche redresseuse est composée d'au moins une rangée d'éléments redresseurs (5, 6) en forme de tube ou de tige agencés l'un à côté de l'autre à distance mutuelle, **en ce que** la rangée des éléments redresseurs (5, 6) est agencée sous la forme d'un V ou d'un V inversé avec une inclinaison opposée par rapport à la rangée correspondante des profilés séparateurs de gouttes (4) de la couche séparatrice de goutte (39) et **en ce que** l'inclinaison des éléments redresseurs (5, 6) par rapport à l'horizontale est inférieure à celle des profilés séparateurs de gouttes (4), dans lequel les éléments redresseurs (5, 6) sont inclinés d'un angle de 10 à 30 ° par rapport à l'horizontale.

2. Aménagement séparateur de gouttes selon la revendication 1, **caractérisé en ce que** la couche séparatrice de gouttes (3) et la couche redresseuse (2) sont montées sur un support (7) via une structure d'appui commune (30).

3. Aménagement séparateur de gouttes selon la revendication 1 ou 2, **caractérisé en ce que** les éléments redresseurs (5, 6) se présentent en section transversale sous une forme circulaire ou ovale.

4. Aménagement séparateur de gouttes selon la revendication 1 ou 2, **caractérisé en ce que** les éléments redresseurs (5, 6) se présentent en section transversale sous une forme rectangulaire.

5. Aménagement séparateur de gouttes selon la revendication 1 ou 2, **caractérisé en ce que** les éléments redresseurs se présentent en section transversale sous la forme d'une coque, en particulier sous la forme d'un demi-cercle.

6. Aménagement séparateur de gouttes selon l'une quelconque des revendications précédentes, **caractérisé en ce que** les éléments redresseurs présentent des ouvertures d'entrée et de sortie pour le liquide délivré par la couche séparatrice de gouttes.

7. Aménagement séparateur de gouttes selon l'une quelconque des revendications précédentes, **caractérisé en ce que** les éléments redresseurs sont montés à rotation.

8. Aménagement séparateur de gouttes selon l'une quelconque des revendications 1 à 6, **caractérisé en ce que** les éléments redresseurs sont montés de manière à pouvoir osciller.

9. Aménagement séparateur de gouttes selon l'une quelconque des revendications précédentes, **caractérisé en ce que** la couche redresseuse (2) est formée dans la direction de l'écoulement gazeux par plusieurs couches d'éléments redresseurs (5, 6).

10. Aménagement séparateur de gouttes selon la revendication 9, **caractérisé en ce que** les éléments redresseurs (5, 6) de couches adjacentes sont décalés l'un de l'autre.

11. Aménagement séparateur de gouttes selon l'une quelconque des revendications précédentes, **caractérisé en ce que** les profilés séparateurs de gouttes (4) agencés en forme de V et les éléments redresseurs (5, 6) agencés sous la forme d'un V inversé sont fixés centralement sur une paroi d'extrémité commune (16).
